# FASCICULE DE BREVET EUROPEEN

(11) **EP 1 683 135 B1**
(45) Date de publication et mention de la délivrance du brevet: **12.12.2007**
(21) Numéro de dépôt: 04805720.2
(22) Date de dépôt: 01.10.2004
(51) Int. Cl.: G11B 5/74, G11B 5/82, G11B 5/84, G11B 5/85, G11B 5/855

(54) **SUPPORT DE STOCKAGE D'INFORMATIONS ET PROCEDE DE FABRICATION D'UN TEL SUPPORT**
INFORMATIONSSPEICHERMEDIUM UND VERFAHREN ZUR HERSTELLUNG EINES SPEICHERMEDIUMS DIESES TYPS
INFORMATION STORAGE MEDIUM AND METHOD FOR PRODUCING A STORAGE MEDIUM OF THIS TYPE

(30) Priorité: 03.10.2003 FR 0350650
(43) Date de publication de la demande: 26.07.2006
(73) Titulaire: COMMISSARIAT A L'ENERGIE ATOMIQUE, 75015 Paris (FR)
(72) Inventeur: LANDIS, Stéfan, F-38500 Voiron (FR)
(74) Mandataire: Poulin, Gérard
(86) Numéro de dépôt international: PCT/FR2004/050477
(87) Numéro de publication internationale: WO 2005/034098

(56) Documents cités:
- WO-A-03/005349
- US-A1- 2002 022 147
- US-B1- 6 602 620

## Description

### DOMAINE TECHNIQUE

La présente invention concerne un support de stockage d'informations (« information storage medium ») et un procédé de fabrication d'un tel support.

Elle s'applique notamment aux disques durs pour les ordinateurs ainsi qu'aux mémoires pour les appareils numériques portatifs.

### ETAT DE LA TECHNIQUE ANTERIEURE

Les mémoires de stockage d'informations, et en particulier les disques durs d'ordinateurs, sont actuellement constitués de couches minces et continues de grains ferromagnétiques. L'aimantation de ces grains est dirigée dans le plan des couches et chaque unité élémentaire d'information, plus simplement appelée « bit », est constituée de plusieurs grains dont toutes les aimantations sont sensiblement parallèles.

Suivant la direction moyenne de l'aimantation de chaque unité élémentaire d'information, la tête de lecture/écriture, en volant au-dessus d'une couche mince de grains ferromagnétiques, code des informations en créant un champ magnétique local, susceptible d'orienter l'aimantation de chaque unité élémentaire d'information dans l'une ou l'autre direction.

La densité des informations stockées sur de tels supports est limitée par la taille des unités élémentaires d'information et par les zones de transition. Afin d'augmenter cette densité, diverses solutions ont été envisagées:
- l'utilisation de matériaux magnétiques continus, avec une aimantation perpendiculaire au plan de la couche, et
- l'utilisation de supports « discrets », c'est-à-dire de réseaux (« arrays ») de plots (« dots ») magnétiques, chaque plot correspondant à une unité élémentaire d'information.

À ce sujet, on se reportera au document suivant :
[1] S.Y. Chou, P.R. Krauss et L. Kong, « Nanolithographically defined magnetic structures and quantum magnetic disk », Journal of Applied Physics 79, 6101 (1996).

Pour la fabrication de mémoires magnétiques, on connaît, et l'on a déjà utilisé, les techniques suivantes :
(1) fabrication à partir d'un réseau de plots sub-microniques, par exemple en silicium, en aluminium, en résine ou en verre, sur lesquels on a déposé un matériau magnétique,
(2) fabrication par gravure d'une couche mince magnétique à travers un masque de résines définissant des plots magnétiques, et
(3) fabrication par modification locale des propriétés physiques d'une couche mince magnétique.

Au sujet des techniques (1) à (3), on se reportera respectivement aux documents [2] à [4] suivants :
[2] S. Landis, B. Rodmacq et B. Dieny, "Domain structure of magnetic layers deposited on patterned silicon", Applied Physics Letters, 75, 2473 (1999)
[3] P.R. Krauss et S.Y. Chou, "Fabrication of planar quantum magnetic disk stucture using electron beam lithography, reactive ion etching, and chemical mechanical polishing", J. Vac. Sci. Technol. B, 13, 2850 (1995)
[4] C. Chappert, H. Bernas, J. Ferré, V. Klotter, J.-P. Jamet, Y. Chen, E. Cambril, T. Devolder, F. Rousseaux, V. Mathet et H. Launois, "Domain structure of magnetic layers deposited on patterned silicon", Science, 280, 1919 (1998).

Contrairement à la technique (3), les techniques (1) et (2) impliquent la présence d'une topographie à la surface d'un échantillon avec lequel elles sont mises en oeuvre.

On a schématiquement illustré cela par :

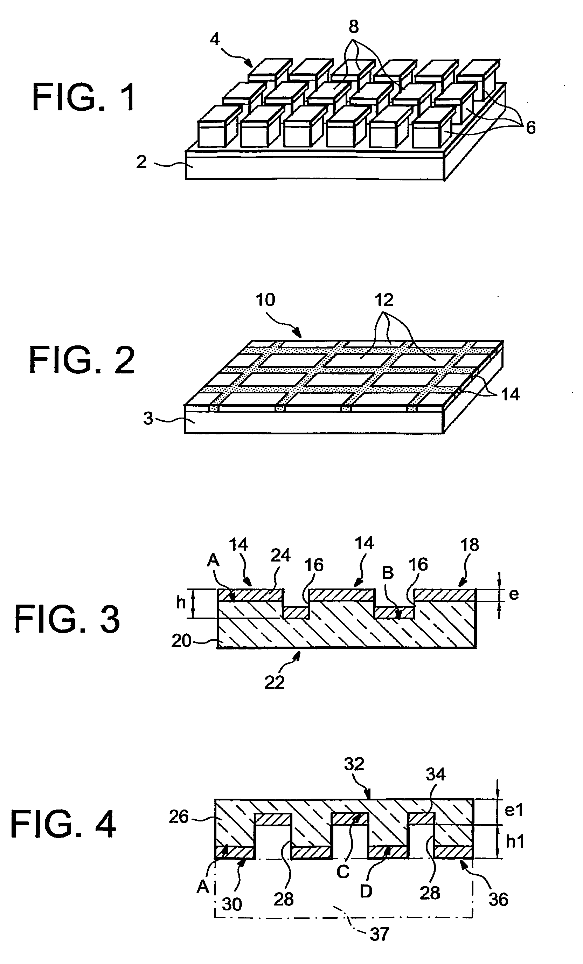

- la figure 1, où l'on voit un substrat 2 sur lequel on a créé une topographie 4 (comprenant des plots 6 qui sont respectivement recouverts de couches magnétiques 8), conformément à la technique (1) ou (2), et
- par la figure 2, où l'on voit un substrat 3 sur lequel on a créé un ensemble de zones magnétiques 12 qui sont séparées par des zones amagnétiques 14, conformément à la technique (3).

De plus, les techniques (1) et (2) utilisent des méthodes qui sont plus ou moins standard dans le domaine de la micro-électronique : à titre d'exemple, une méthode de ce genre comprend une étape de lithographie optique ou électronique ou ionique, un pelage (« lift off »), une gravure et un dépôt.

Pour ce qui concerne la technique (3), on obtient un support d'enregistrement en formant un masque directement ou indirectement sur la surface d'un échantillon et en irradiant cet échantillon par un faisceau d'ions à travers le masque. Les zones qui ne sont pas protégées sont alors exposées à ce faisceau.

Jusqu'à présent, seul le système tri-couche Pt/Co/Pt a pu être utilisé pour démontrer la fiabilité d'un tel procédé (voir le document [4]), alors que la technique (1) peut être mise en oeuvre avec tout type de matériau.

En outre, jusqu'à présent, personne n'a été capable de résoudre tous les problèmes qui sont liés au vol d'une tête de lecture/écriture au-dessus d'une surface non plane pour lire/écrire des informations, en particulier les problèmes hydrodynamiques et les problèmes de synchronisation pour que la tête vole convenablement au-dessus des plots que comporte la surface.

Tout cela est critique pour le développement de mémoires magnétiques discrètes.

### EXPOSÉ DE L'INVENTION

La présente invention propose un support de stockage d'informations et un procédé de fabrication de ce support, qui ont à la fois les avantages des techniques (1) et (3) dont il a été question plus haut.

Ainsi, comme la technique (3), l'invention permet d'obtenir une surface plane (correspondant à la configuration standard pour les têtes de lecture/écriture).

Et, comme la technique (1), l'invention permet
- de fabriquer un support de stockage d'informations indépendamment du choix du matériau magnétique,
- de dissocier l'une de l'autre l'étape de fabrication du substrat et l'étape de dépôt de matériau magnétique, tout en permettant d'obtenir des supports d'enregistrements discrets, et
- de conserver toute la technologie actuellement utilisée pour le vol de la tête de lecture/écriture au-dessus d'un support de stockage d'informations et pour la détection des unités élémentaires d'information.

De façon précise, la présente invention a pour objet un support de stockage d'informations, ce support comprenant une face avant sensiblement plane et une face arrière, ce support étant destiné à être lu et/ou écrit par un dispositif de lecture et/ou d'écriture placé en regard de la face avant, ce support étant caractérisé en ce que la face arrière comprend des zones en creux et en ce que tout ou partie des parois latérales et/ou le fond de ces zones en creux est recouvert d'un dépôt magnétique qui est destiné au stockage des informations, la distance séparant la face avant du dépôt magnétique étant telle que le dispositif de lecture et/ou d'écriture puisse lire et/ou écrire les informations dans le dépôt magnétique.

Selon un mode de réalisation particulier du support objet de l'invention, la face arrière de ce support est solidaire d'un substrat.

L'invention concerne aussi un procédé de fabrication du support de stockage d'informations objet de l'invention, dans lequel on forme le support comprenant la face avant sensiblement plane, la face arrière et, sur cette face arrière, un réseau discret de stockage d'informations sous la forme de zones en creux avantageusement de dimensions submicroniques, pourvues du dépôt magnétique, chaque zone en creux étant apte à contenir au moins un domaine magnétique représentant une unité élémentaire d'information qui est définie par une direction d'aimantation, et la distance séparant la face avant du dépôt magnétique étant telle qu'un dispositif de lecture et/ou d'écriture puisse lire et/ou écrire les informations dans le dépôt magnétique.

Les zones en creux de la face arrière peuvent avoir une forme quelconque. On choisit avantageusement des zones en creux de forme cylindrique mais ces zones peuvent également être coniques, parallélépipédiques ou autres.

La face arrière peut comprendre en outre des zones aptes à rigidifier le support.

Selon un premier mode de réalisation particulier du procédé objet de l'invention, le dépôt magnétique est formé dans le fond des zones en creux, au moyen d'un faisceau d'atomes d'au moins un matériau magnétique que l'on envoie sur la face arrière du support, perpendiculairement à cette face arrière.

Selon un deuxième mode de réalisation particulier, le dépôt magnétique est formé sur tout ou partie des parois latérales des zones en creux, au moyen d'un faisceau d'atomes d'au moins un matériau magnétique que l'on envoie sur la face arrière du support, obliquement par rapport à cette face.

Selon un mode particulier de l'invention, le support comprend un substrat et l'on forme les zones en creux directement dans ce substrat.

Selon un autre mode de réalisation particulier, le support comprend une première couche, on forme une deuxième couche sur cette première couche et l'on forme les zones en creux à travers cette deuxième couche de sorte que le fond de ces zones en creux est formé,par la première couche.

On peut former les zones en creux par gravure, à travers un masque de gravure préalablement formé sur la face arrière, former ensuite le dépôt magnétique puis éliminer le masque de gravure y compris le dépôt magnétique qui s'y trouve du fait de la formation du dépôt magnétique.

La face arrière du support peut être fixée à un substrat auxiliaire, ce support étant pourvu des zones en creux comportant le dépôt magnétique.

Selon un mode de mise en oeuvre particulier du procédé objet de l'invention, on forme une première couche sur un substrat, on forme une deuxième couche sur cette première couche et une troisième couche sur la deuxième couche, on forme les zones en creux à travers la troisième couche, de sorte que le fond des zones en creux est formé par la deuxième couche, on forme le dépôt magnétique dans les zones en creux, on sépare la deuxième couche du substrat, et l'on ferme les zones en creux par une quatrième couche.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 illustre schématiquement les techniques connues (1) et (2), mentionnées plus haut, et a déjà été décrite,
- la figure 2 illustre schématiquement la technique connue (3), mentionnée plus haut, et a déjà été décrite,
- la figure 3 est une vue en coupe schématique et partielle d'un support connu de stockage d'informations,
- la figure 4 est une vue en coupe schématique et partielle d'un mode de réalisation particulier du support de stockage objet de l'invention,
- la figure 5 est une vue schématique d'un plot d'un support connu de stockage d'informations, ce plot ayant une aimantation parallèle à la face avant de ce support,
- la figure 6 est une vue schématique d'une zone en creux d'un support de stockage d'informations conforme à l'invention, cette zone en creux ayant une aimantation parallèle à la face avant de ce support,
- la figure 7 montre les variations du champ magnétique suivant une direction perpendiculaire à la face avant d'un support de stockage d'informations, dans le cas d'un support connu (courbe A) et dans le cas d'un support conforme à l'invention (courbe B),
- la figure 8 est une vue schématique d'un plot d'un support connu de stockage d'informations, ce plot ayant une aimantation perpendiculaire à la face avant de ce support,
- la figure 9 est une vue schématique d'une zone en creux d'un support de stockage d'informations conforme à l'invention, cette zone en creux ayant une aimantation perpendiculaire à la face avant de ce support,
- la figure 10 montre les variations du champ magnétique suivant une direction parallèle à la face avant d'un support de stockage d'informations, dans le cas d'un support connu (courbe A) et dans le cas d'un support conforme à l'invention (courbe B),
- la figure 11 illustre schématiquement le vol d'une tête de lecture/écriture au dessus de la face avant d'un support connu de stockage d'informations,
- la figure 12 illustre schématiquement le vol d'une tête de lecture/écriture au dessus de la face avant d'un support de stockage d'informations, conforme à l'invention,
- la figure 13 est une vue schématique et partielle d'un support de stockage d'informations conforme à l'invention, comportant des zones destinées à rigidifier ce support,
- la figure 14 illustre schématiquement la formation du dépôt magnétique par un faisceau d'atomes sous incidence normale,
- la figure 15 illustre schématiquement la formation du dépôt magnétique par un faisceau d'atomes sous incidence oblique,
- la figure 16 illustre schématiquement la formation d'un support de stockage d'informations conforme à l'invention, en utilisant une couche que l'on grave pour y former les trous,
- la figure 17 illustre schématiquement l'utilisation d'un masque de gravure pour former un support de stockage d'informations conforme à l'invention,
- les figures 18 et 19 illustrent schématiquement des étapes de la fabrication d'un support de stockage d'informations conforme à l'invention, muni d'un substrat auxiliaire, et
- les figures 20 et 21 illustrent schématiquement des étapes de la fabrication d'un support de stockage d'informations conforme à l'invention, utilisant deux substrats pour cette fabrication.

### EXPOSÉ DÉTAILLÉ DE MODES DE RÉALISATION PARTICULIERS

La présente invention permet de réaliser un support (« medium ») discret à surface plane, en discrétisant la surface magnétique par la face arrière d'un substrat et en déposant un ou des matériaux magnétiques sur cette face arrière.

Ceci est schématiquement illustré par les figures 3 et 4 qui permettent de comparer la topographie résultant de la structuration d'un substrat par un procédé conforme à l'invention (figure 4) à la topographie résultant d'une structuration classique d'un substrat (figure 3).

Des plots 14 séparés par des tranchées 16 sont formés sur la face avant 18 du substrat structuré 20 de la figure 3, dont la face arrière 22 est sensiblement plane. Un matériau magnétique 24 est déposé dans des régions A et B qui constituent respectivement le sommet des plots et le fond des tranchées.

Dans le cas du substrat structuré 26 de la figure 4, des creux 28 sont formés dans la face arrière 30 de ce substrat dont la face avant 32 est sensiblement plane.

Un matériau magnétique 34 est déposé dans des régions C et D qui constituent respectivement le fond des creux et le sommet des parois 36 qui séparent ces creux.

Dans le cas de la figure 3, la hauteur h des tranchées est choisie de telle sorte que seule la région A soit suffisemment proche de la tête de lecture/écriture pour être utilisable pour le stockage d'informations, la région B étant alors suffisamment loin pour ne perturber ni la lecture ni l'écriture et pour ne pas perturber la région A. Rappelons que l'on place la tête de lecture/écriture (non représentée) au-dessus de la face avant 18.

La hauteur h peut être avantageusement choisie de telle sorte qu'elle soit supérieure à l'épaisseur e du matériau magnétique déposé, afin qu'il n'existe aucune connexion directe entre ces différentes régions.

Par ailleurs, on peut calculer la hauteur minimale (valeur minimale hₘᵢₙ de h) en dessous de laquelle l'interaction magnétostatique (interaction entre l'aimantation d'une unité élémentaire d'information et le champ magnétique rayonné par les autres zones du support, qui sont recouvertes par du matériau magnétique) est prédominante par rapport à l'énergie d'anisotropie qui détermine la stabilité de la direction d'aimantation.

Alors, afin d'obtenir une meilleur stabilité, on peut choisir avantageusement une hauteur h supérieure à cette hauteur minimale hₘᵢₙ.

Il convient de noter que l'on peut faire un raisonnement similaire pour la détermination du paramètre h1 de la figure 4 (voir plus loin).

Dans le cas de cette figure 4, h1 représente la hauteur des creux et l'on choisit aussi cette hauteur h1 de telle sorte que seule les régions C soient utilisables pour le stockage des informations et que les régions D ne perturbent pas ces régions C.

Mais dans ce cas, il faut aussi optimiser l'épaisseur e1, qui est la somme de l'épaisseur du matériau magnétique déposé et de la distance entre le fond des creux et la face avant 32 du support, de telle sorte que les régions C ne soient pas trop éloignées de la tête de lecture/écriture (qui n'est pas représentée et que l'on place encore au dessus de la face avant du support), afin que le signal magnétique, qui est susceptible d'être enregistré dans le matériau 34 déposé au fond des creux, reste détectable.

Par exemple, on peut avantageusement choisir e1 inférieur à h1.

Connaissant le dispositif (ou tête) de lecture/écriture utilisé et le champ magnétique maximum que ce dispositif est capable d'engendrer à sa surface, on peut également déterminer l'intensité du champ magnétique rayonné au niveau de la couche (ou zone) magnétique 34 dans la région C.

En effet, l'intensité du champ magnétique rayonné décroît comme 1/r^{a} où l'exposant a, qui dépend de la géométrie du dispositif de lecture/écriture, est voisin de 3. Par conséquent, connaissant la hauteur de vol du dispositif lecture/écriture et la valeur du champ magnétique qu'il est nécessaire d'obtenir au niveau de la couche magnétique 34, on peut ajuster l'épaisseur e1.

Il faut aussi prendre en compte les contraintes mécaniques que devra subir le support de la figure 4, pour que cette épaisseur e1, qui dépend de la nature chimique et des propriétés mécaniques du matériau utilisé pour réaliser ce support, soit suffisante pour qu'il n'y ait pas de rupture du support aux endroits où son épaisseur est la plus faible.

La face arrière 30 du support de la figure 4 peut être rendue solidaire d'un substrat 37, par exemple par collage, en vue de renforcer ce support.

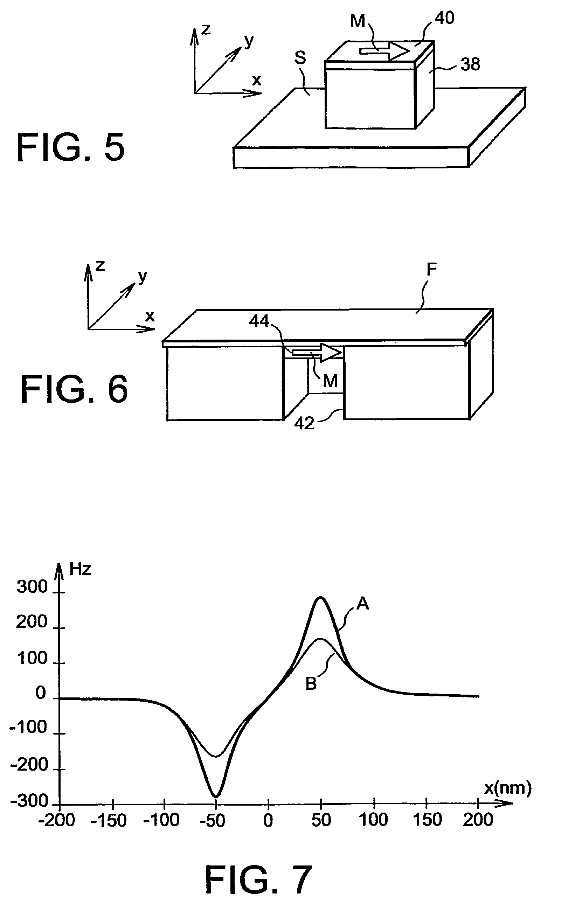

Pour donner un ordre de grandeur du signal dont il a été question plus haut, on peut comparer l'intensité de la composante Hz du champ magnétique rayonné dans différents cas, en faisant référence aux figures 5 à 10. On se place dans le cas où une unité élémentaire d'information est un parallélépipède de matière magnétique de 200nmx200nmx10nm, où 10nm représente l'épaisseur de la couche de matériau magnétique.

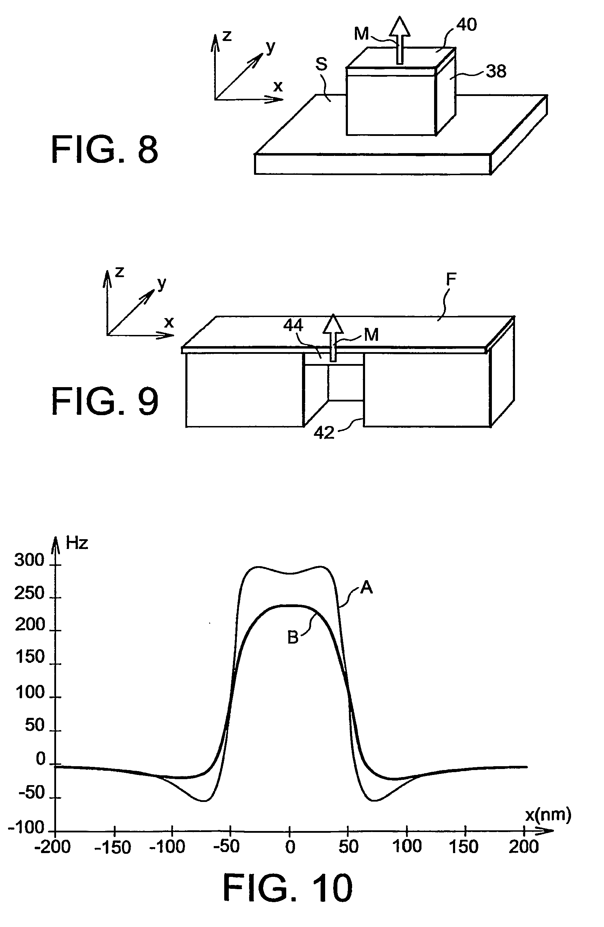

On peut comparer l'intensité de la composante Hz d'un système classique de plots à celle d'un support conforme à l'invention (figures 8 et 9).

On précise que Hz est comptée suivant l'axe z du repère (x, y, z) dans lequel chacun des axes x, y, z est perpendiculaire aux deux autres. Dans le cas des figures 5 et 8, le plan (x, y) est le plan de la surface S du support, à partir de laquelle on a formé les plots que l'on suppose parallélépipédiques dans le cas de ces figures 5 et 8.

Dans le cas des figures 6 et 9, le plan (x, y) est le plan de la face avant F du support, au dessous de laquelle on a formé les creux que l'on suppose également parallèlépipédiques dans le cas de ces figures 6 et 9.

En premier lieu, on compare l'intensité de la composante Hz pour un plot 38 recouvert d'une couche magnétique 40 (figure 5) et pour un creux 42 dont le fond est recouvert d'une couche magnétique 44, les couches 40 et 44 ayant une aimantation M qui est perpendiculaire à la direction z.

Pour le plot classique 38, c'est-à-dire le plot qui est en relief par rapport à la surface, la tête de lecture vole typiquement à 20nm au dessus de la surface du support.

On se reportera à la figure 7 qui montre les variations de Hz (en unités arbitraires) en fonction de la distance x (en nm) au centre du plot (comptée parallèlement à l'axe x). Le cas du plot classique correspond à la courbe A de la figure 7.

Si l'on réalise le réseau de « plots en creux » 42 en utilisant la présente invention, avec une épaisseur e1 (figure 4) de l'ordre de 10nm, la tête vole à une hauteur de 30nm de la surface du matériau magnétique (correspondant à 10nm pour l'épaisseur du substrat plus 20nm pour la hauteur de vol classique) et ce cas du « plot en creux » conformément à l'invention correspond à la courbe B de la figure 7.

En considérant les courbes A et B de la figure 7, on remarque que le maximum de Hz sur la courbe B est seulement égal à la moitié du maximum de Hz sur la courbe A et reste du même ordre de grandeur que ce dernier.

On considère maintenant le cas où l'aimantation M est perpendiculaire à la surface du support et donc parallèle à la direction z. Plus précisément, M est perpendiculaire à la surface S, dans le cas du plot classique (figure 8), et à la face avant F, dans le cas du « plot en creux » formé conformément à l'invention (figure 9).

On se place encore dans la même configuration, c'est-à-dire que la courbe A de la figure 10 représente le signal perçu par la tête à 20nm au dessus de la surface du plot classique, appartenant à un réseau de plots en relief, et que la courbe B de la figure 10 correspond à un vol de la tête à 20nm au dessus de la face avant du support réalisé conformément à la présente invention (avec une épaisseur e1 de 10nm, soit une hauteur effective de 30nm au dessus de la surface magnétique).

On précise que la figure 10 montre encore les variations de Hz (en unités arbitraires) en fonction de la distance x (en nm) au centre du plot (comptée parallèlement à l'axe x).

La figure 10 montre alors que, dans le cas d'une aimantation perpendiculaire, la réduction du signal est moins importante : on passe de 280 à 230 en unités arbitraires.

Cette configuration (aimantation perpendiculaire) est plus avantageuse que la précédente pour la présente invention.

Les exemples des figures 6 et 9 montrent ainsi que l'épaisseur résiduelle du substrat qui sépare la couche magnétique de la surface du support d'enregistrement (épaisseur e1) a peu d'influence sur l'intensité du signal rayonné et rend donc possible l'utilisation de la présente invention.

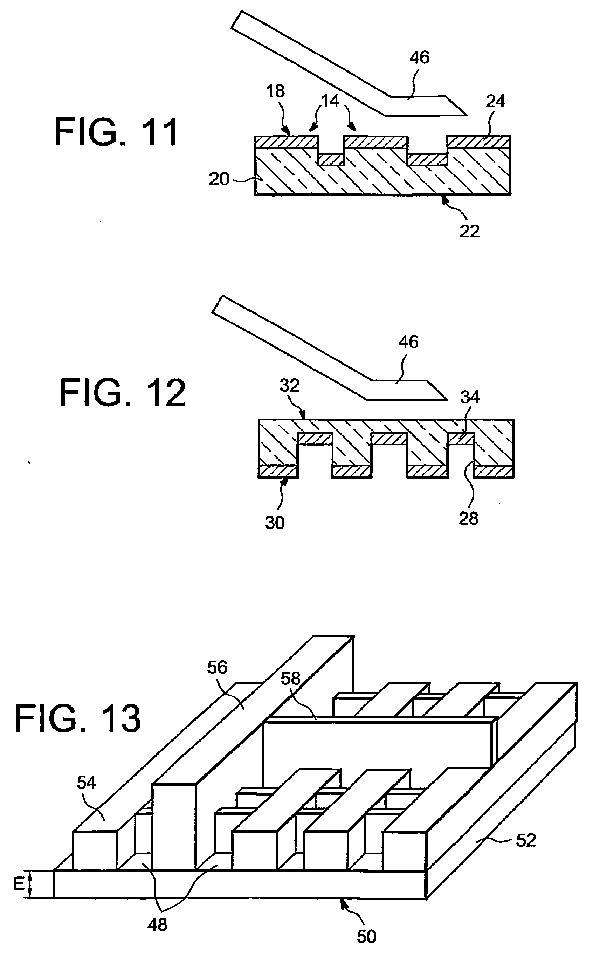

Pour ce qui concerne le vol de la tête de lecture/écriture 46 (figures 11 et 12), la configuration utilisée est celle de la figure 11 dans le cas d'un support classique, du genre de celui de la figure 3 : la tête 46 vole au dessus de la surface supérieure 18, pourvue des plots magnétiques en relief.

Dans le cas d'un support conforme à l'invention, du genre de celui de la figure 4, la configuration utilisée est celle de la figure 12 : la tête 46 vole au dessus de la face avant sensiblement plane 32, au dessous de laquelle sont formés des « plots en creux ».

Dans le cas de la configuration de la figure 12, on est alors dans les mêmes conditions que dans le cas des supports continus qui sont actuellement utilisés dans la fabrication des supports d'enregistrement. Ceci permet de résoudre différents problèmes liés à la topographie du substrat :
- la stabilité du vol de la tête de lecture/écriture au dessus d'une surface non plane (que cette tête de lecture/écriture soit un dispositif semblable à celui qui est actuellement utilisé dans les disques durs ou une pointe de champ proche (« near field tip ») ou une matrice de pointes ou encore une lentille dans le cas de l'enregistrement magnéto-optique),
- la possibilité de s'affranchir du dépôt d'une couche de protection sur la surface du support pour protéger le film magnétique (couche qui pourrait accroître la distance entre la tête et le support et entraînerait donc une réduction du signal détectable),
- la possibilité d'utiliser la technologie déjà existante et bien maîtrisée pour le traitement de la surface du support d'enregistrement (comme par exemple le dépôt d'un lubrifiant ou d'une couche de protection), et
- la possibilité de réduire la hauteur de vol de la tête, par rapport au cas classique de la figure 11, et donc d'augmenter l'intensité du signal détecté pour la lecture.

On donne ci-après des exemples du procédé objet de l'invention.

On forme un réseau (« array ») de trous, dont les dimensions sont comprises entre quelques nanomètres et plusieurs micromètres et dont la section est quelconque (par exemple carrée, circulaire ou ovale), dans une face d'un substrat que l'on appelle « face arrière », l'autre face sensiblement plane de ce substrat constituant alors la face avant.

Pour la formation du réseau de trous, on peut par exemple utiliser des techniques de lithographie/gravure ou de nano-impression ou d'auto-organisation.

L'épaisseur E (figure 13) qui subsiste entre le fond des trous 48, ou creux, et la face plane 50 du substrat 52 (où sont formés les trous) sera choisie de telle sorte qu'elle soit la plus fine possible, tout en assurant une rigidité mécanique suffisante à l'ensemble obtenu pour que ce dernier ne se casse pas.

On pourra avantageusement prévoir des zones sans plot, telles que les zones 54, 56 et 58 de la figure 13, ces zones ayant par conséquent l'épaisseur initiale totale du sustrat ou une fraction de celle-ci, dans des régions judicieusement choisies, pour renforcer la rigidité mécanique de l'ensemble du support.

Pour former le dépôt magnétique, on utilise une technique classique de dépôt de couche(s) mince(s), par exemple la pulvérisation cathodique, l'épitaxie ou l'électrolyse. Ce dépôt peut être constitué d'un matériau magnétique tel que Co, Fe ou Ni. Il peut aussi être constitué de plusieurs matériaux magnétiques.

Ce dépôt magnétique peut être aussi formé d'une seule couche ou d'une superposition de couches de matériaux magnétiques et éventuellement non magnétiques. A titre d'exemple, on peut utiliser des multicouches choisies parmi Co/Pt, Fe/Pt et Co/Py, où Py désigne le permalloy.

Le dépôt magnétique peut être fait sous incidence normale ou sous incidence oblique, avec un angle déterminé. A ce sujet, on se référera au document suivant :
[5] Demande Internationale WO 03/005349A, « support de stockage d'informations à réseau de plots aimantés latéralement et procédé de fabrication de ce support », invention de B. Rodmacq, S. Landis et B. Dieny.

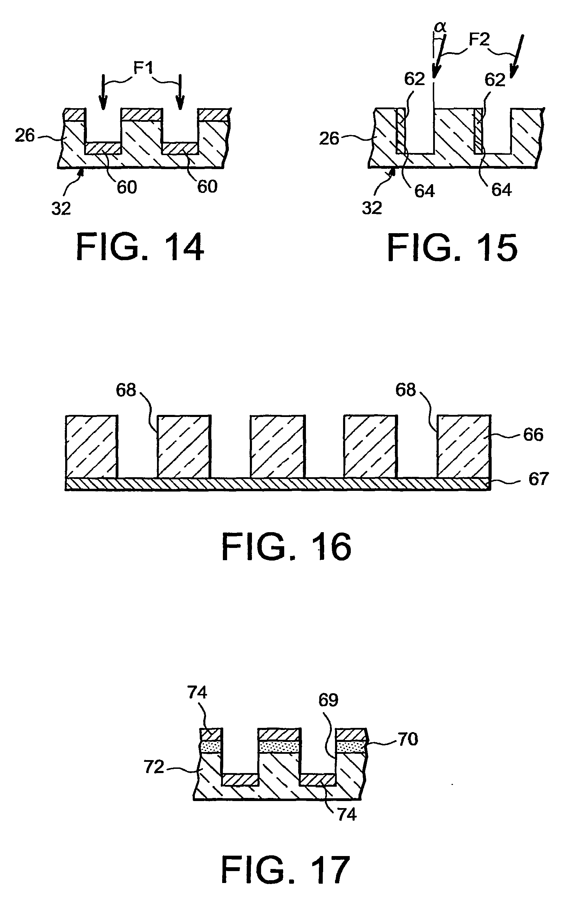

La figure 14 illustre schématiquement la formation du dépôt magnétique 60 au fond des creux, au moyen d'un faisceau F1 d'atomes de matériau(x) magnétique(s) que l'on envoie sous incidence normale sur le support.

La figure 15 illustre schématiquement la formation du dépôt magnétique 62 sur les parois latérales 64 des creux, au moyen d'un faisceau F2 d'atomes de matériau(x) magnétique(s) que l'on envoie sous une incidence oblique α sur le support.

Si l'on modifie l'angle d'incidence, le dépôt se forme sur des parois différentes. Par exemple, l'utilisation de l'incidence -α permet d'atteindre les parois opposées à celles qui correspondent à α. On peut ainsi former des dépôts sur la totalité ou une partie des parois latérales, en envoyant les atomes de matériau(x) magnétique(s) sous une ou plusieurs incidences successives.

On peut aussi combiner un dépôt sous incidence normale et un ou plusieurs dépôts sous une ou plusieurs incidences obliques pour obtenir un dépôt sur le fond des trous et sur les parois latérales.

Les caractéristiques géométriques du support que l'on forme sont choisies de telle sorte que les interactions magnétostatiques entre les différentes régions recouvertes de matériau(x) magnétique(s) ne soient pas prédominantes par rapport à la stabilité du ou des matériaux magnétiques, c'est-à-dire par rapport à la capacité de ce matériau (ou ces matériaux) à conserver sa (leur) direction d'aimantation en fonction du champ magnétique subi par lui (eux), capacité qui est liée aux propriétés d'anisotropie de ce ou ces matériaux, afin de ne pas perturber l'écriture des informations.

Par exemple, si l'on considère le cas où le dépôt de matériau(x) magnétique(s) est formé dans le fond des trous et sur les parties en relief (cas de la figure 4), on peut choisir, pour le paramètre h1 que l'on voit sur la figure 4, une valeur supérieure à l'épaisseur du dépôt formé. Plus h1 sera grand par rapport à l'épaisseur de la couche magnétique formée, plus les interactions magnétostatiques entre ces régions seront faibles par rapport à la capacité de cette couche à conserver sa direction d'aimantation, c'est-à-dire son énergie d'anisotropie.

Pour ce qui concerne les interactions entre les fonds de trous adjacents, à période constante, on peut réduire la dimension des trous et augmenter l'espacement entre ceux-ci.

Pour l'utilisation du support formé, la tête de lecture/écriture (tête de lecture/écriture classique, utilisée dans les disques durs actuels, ou pointes de champ proche ou matrice de pointes, ou encore lentille dans le cas de l'enregistrement magnéto-optique) sera placée en regard de la face avant sensiblement plane du support, comme on l'a déjà mentionné.

On donne encore ci-après quelques autres exemples de l'invention.

On précise tout d'abord que le support peut être par exemple en silicium, en verre, en aluminium ou en un polymère durci :

De plus, le réseau de trous peut être directement gravé dans la face arrière d'un substrat par exemple fait d'un matériau choisi parmi les matériaux précédents.

En variante, on forme une couche 66 (figure 16) sur une couche 67 faite d'un matériau différent de celui de la couche 66 et l'on forme les trous 68 à travers la couche 66 de sorte que le fond des trous est formé par la couche 67.

L'épaisseur de la couche 66 est comprise entre quelques nanomètres et quelques micromètres.

De plus, on peut choisir les matériaux des couches 66 et 67 de façon à avoir une sélectivité importante de gravure. Par exemple, on peut choisir le silicium pour la couche 67 et l'oxyde de silicium pour la couche 66, en vue de graver cette dernière de façon humide, au moyen d'acide fluorhydrique.

En outre, on peut avantageusement choisir le matériau de la couche 67 de façon qu'il renforce les propriétés mécaniques de l'ensemble obtenu. A titre d'exemple, on utilise une couche 66 en silicium et une couche 67 en tungstène.

De plus, on forme de préférence les trous 69 (figure 17) à travers un masque de gravure 70 préalablement formé sur la face arrière d'un substrat 72, ce masque étant fait à partir d'une résine photosensible (« photoresist ») ou étant un masque dur, et l'on forme le dépôt magnétique 74 avant d'éliminer ce masque, afin de pouvoir éliminer ce dépôt des parties en relief (lorsque le masque est éliminé).

On s'affranchit ainsi des interactions magnétostatiques entre le fond des trous et les parties en relief.

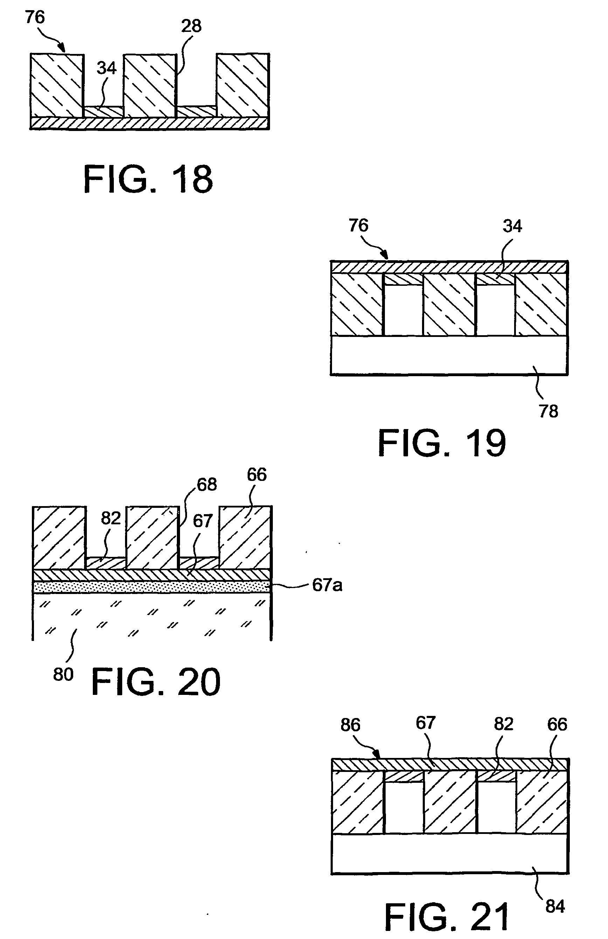

En outre, le support 76 (figure 18), obtenu conformément à l'invention (et comportant donc des trous 28 pourvus de dépôts magnétiques 34), peut être reporté, par exemple par collage, sur un autre substrat 78 (figure 19) qui est avantageusement plat, par exemple pour renforcer la résistance mécanique du support 76. On voit que le substrat 78 est fixé à la face arrière du substrat 76.

De plus, selon une variante de fabrication, qui est schématiquement illustrée par la figure 20, on forme une première couche 67a sur un substrat 80. On forme ensuite la couche 67 de la figure 16 sur la couche 67a puis on forme la couche 66 sur la couche 67. On forme ensuite les trous 68 à travers la couche 66, le fond des trous étant ainsi constitué par la couche 67. On forme ensuite le dépôt magnétique 82 au fond des trous. Puis on sépare la couche 67 du substrat 80, par exemple par une technique de gravure humide.

Par exemple, on choisira avantageusement du silicium (Si) pour le matériau du substrat 80 et de la couche 67 et de l'oxyde de silicium (SiO₂) pour le matériau de la couche 67a. Une attaque humide à l'acide fluorhydrique (HF) permet de supprimer sélectivement le SiO₂ par rapport au Si.

On fixe ensuite une couche auxiliaire 84 dite quatrième couche (figure 21) sur la face arrière de la couche 66, face à partir de laquelle les trous ont été formés, et l'on ferme ainsi les trous par cette couche 84.

La face avant du support conforme à l'invention ainsi obtenu est la face 86 de la couche 67, opposée à la face de cette couche 67 qui se trouve du côté des trous.

## Revendications

1. Support de stockage d'informations, ce support comprenant une face avant (32) sensiblement plane et une face arrière (30), ce support étant destiné à être lu et/ou écrit par un dispositif de lecture et/ou d'écriture (46) placé en regard de la face avant, ce support étant **caractérisé en ce que** la face arrière comprend des zones en creux (28, 68, 69) et **en ce que** tout ou partie des parois latérales et/ou le fond de ces zones en creux est recouvert d'un dépôt magnétique (34, 60, 62, 74, 82) qui est destiné au stockage des informations, la distance séparant la face avant du dépôt magnétique étant telle que le dispositif de lecture et/ou d'écriture puisse lire et/ou écrire les informations dans le dépôt magnétique.

2. Support selon la revendication 1, dans lequel la face arrière du support est solidaire d'un substrat (37, 78, 84).

3. Procédé de fabrication du support de stockage d'informations selon la revendication 1, dans lequel on forme le support comprenant la face avant (32) sensiblement plane, la face arrière (30) et, sur cette face arrière, un réseau discret de stockage d'informations sous la forme de zones en creux (28, 68, 69) pourvues du dépôt magnétique (34, 60, 62, 74, 82), chaque zone en creux étant apte à contenir au moins un domaine magnétique représentant une unité élémentaire d'information qui est définie par une direction d'aimantation, et la distance séparant la face avant du dépôt magnétique étant telle qu'un dispositif de lecture et/ou d'écriture puisse lire et/ou écrire les informations dans le dépôt magnétique.

4. Procédé selon la revendication 3, dans lequel la face arrière comprend en outre des zones (54, 56, 58) aptes à rigidifier le support.

5. Procédé selon l'une quelconque des revendications 3 et 4, dans lequel le dépôt magnétique (34, 60) est formé dans le fond des zones en creux, au moyen d'un faisceau (F1) d'atomes d'au moins un matériau magnétique que l'on envoie sur la face arrière du support, perpendiculairement à cette face arrière.

6. Procédé selon l'une quelconque des revendications 3 à 5, dans lequel le dépôt magnétique (64) est formé sur tout ou partie des parois latérales des zones en creux, au moyen d'un faisceau (F2) d'atomes d'au moins un matériau magnétique que l'on envoie sur la face arrière du support, obliquement par rapport à cette face.

7. Procédé selon l'une quelconque des revendications 3 à 6, dans lequel le support comprend un substrat (26) et l'on forme les zones en creux (28) directement dans ce substrat.

8. Procédé selon l'une quelconque des revendications 3 à 6, dans lequel le support comprend une première couche (67), on forme une deuxième couche (66) sur cette première couche et l'on forme les zones en creux (68) à travers cette deuxième couche de sorte que le fond de ces zones en creux est formé par la première couche.

9. Procédé selon l'une quelconque des revendications 3 à 8, dans lequel on forme les zones en creux (69) par gravure, à travers un masque de gravure (70) préalablement formé sur la face arrière, on forme ensuite le dépôt magnétique (74) puis on élimine le masque de gravure y compris le dépôt magnétique qui s'y trouve du fait de la formation du dépôt magnétique.

10. Procédé selon l'une quelconque des revendications 3 à 9, dans lequel la face arrière du support est fixée à un substrat auxiliaire (78), ce support étant pourvu des zones en creux comportant le dépôt magnétique.

11. Procédé selon l'une quelconque des revendications 3 à 6, dans lequel on forme une première couche (67a) sur un substrat (80), on forme une deuxième couche (67) sur cette première couche et une troisième couche (66) sur la deuxième couche (67), on forme les zones en creux (68) à travers la troisième couche, de sorte que le fond des zones en creux est formé par la deuxième couche, on forme le dépôt magnétique (82) dans les zones en creux, on sépare la deuxième couche (67) du substrat (80), et l'on ferme les zones en creux par une quatrième couche (84).

## Claims

1. Information storage medium, this medium comprising an approximately plane front face (32) and a back face (30), this medium being designed to be read and/or written by a read and/or write device (46) placed facing the front face, this medium being **characterized in that** the back face comprises recessed areas (28, 68, 69) and **in that** all or part of the side walls and/or the bottom of these recessed areas is covered with a magnetic deposit (34, 60, 62, 74, 82) that will be used for information storage, the distance separating the front face from the magnetic deposit being such that the read and/or write device can read and/or write the information in the magnetic deposit.

2. Medium according to claim 1, in which the back face of the medium is fixed to a substrate (37, 78, 84).

3. Method for manufacturing an information storage medium according to claim 1, in which the medium is formed comprising the approximately plane front face (32), the back face (30) and a discrete information storage array on this back face, in the form of recessed areas (28, 68, 69) provided with a magnetic deposit (34, 60, 62, 74, 82), each recessed area being capable of containing at least one magnetic domain representing an elementary bit defined by a magnetisation direction and and the distance separating the front face of the magnetic deposit is such that a reading and/or writing device is able to read and/or write the informations in the magnetic deposit.

4. Method according to claim 3, in which the back face also comprises areas (54, 56, 58) capable of making the medium stiff.

5. Method according to either of claims 3 and 4, in which the magnetic deposit (34, 60) is formed in the bottom of the recessed areas using a beam (F1) of atoms of at least one magnetic material directed onto the back face of the medium, perpendicular to this back face.

6. Method according to any one of claims 3 to 5, in which the magnetic deposit (64) is formed on all or part of the sidewalls of the recessed areas using a beam (F2) of atoms of at least one magnetic material directed onto the back face of the medium, oblique to this face.

7. Method according to any one of claims 3 to 6, in which the medium includes a substrate (26) and the recessed areas (28) are formed directly in this substrate.

8. Method according to any one of claims 3 to 6, in which the medium comprises a first layer (67) a second layer (66) is formed on this first layer and recessed areas (68) are formed through this second layer such that the bottom of these recessed areas is formed by the first layer.

9. Method according to any one of claims 3 to 8, in which the recessed areas (69) are formed by etching through an etching mask (70) previously formed on the back face, the magnetic deposit (74) is then formed and the etching mask is eliminated including the magnetic deposit located on it due to the formation of the magnetic deposit.

10. Method according to any one of claims 3 to 9, in which the back face of the medium is fixed to an auxiliary substrate (78), this medium being provided with recessed areas comprising the magnetic deposit.

11. Method according to any one of claims 3 to 6, in which a first layer (67a) is formed on a substrate (80), a second layer (67) is formed on this first layer and a third layer (66) is formed on the second layer (67), the recessed areas (68) are formed through the third layer such that the bottom of the recessed areas is formed by the second layer, the magnetic deposit (82) is formed in the recessed areas, the second layer (67) is separated from the substrate (80), and the recessed areas are closed off by a fourth layer (84).

## Patentansprüche

1. Informationsspeichermedium, wobei dieses Medium eine im wesentlichen plane Vorderseite (32) und eine Rückseite (30) umfasst, und dieses Medium dazu bestimmt ist, durch eine der Vorderseite gegenüberstehende Lese- und/oder Schreibvorrichtung (46) gelesen oder beschrieben zu werden,
**dadurch gekennzeichnet, dass** die Rückseite des Mediums hohle Zonen (28, 68, 69) umfasst, und dass die Seitenwände und/oder der Boden dieser hohlen Zonen ganz oder teilweise mit einer magnetischen Abscheidung (34, 60, 62, 74, 82) überzogen sind, die der Speicherung der Informationen dient, wobei der Abstand zwischen der Vorderseite und der magnetischen Abscheidung so ist, dass die Lese- und/oder Schreibvorrichtung in dieser magnetischen Abscheidung Informationen lesen und/oder schreiben kann.

2. Medium nach Anspruch 1, bei dem die Rückseite des Mediums fest verbunden ist mit einem Substrat (37, 78, 84).

3. Herstellungsverfahren des Informationsspeichermediums nach Anspruch 1, in dem man das Medium realisiert, das die im wesentlichen plane Vorderseite (32) und die Rückseite (30) und auf dieser Rückseite ein Informationsspeichergitter in Form von hohlen Zonen (28, 68, 69) umfasst, ausgestattet mit der magnetischen Abscheidung (34, 60, 62, 74, 82), wobei jede hohle Zone fähig ist, wenigstens eine magnetische Domäne zu enthalten, die eine elementare Informationseinheit darstellt, die durch eine Magnetisierungsrichtung definiert wird, und der Abstand zwischen der Vorderseite und der magnetischen Abscheidung so ist, dass die Lese- und/oder Schreibvorrichtung in dieser magnetischen Abscheidung Informationen lesen und/oder schreiben kann.

4. Verfahren nach Anspruch 3, bei dem die Rückseite außerdem Zonen (54, 56, 58) zur Versteifung des Mediums umfasst.

5. Verfahren nach einem der Ansprüche 3 und 4, bei dem man die magnetische Abscheidung (34, 60) im tiefsten Teil der hohlen Zonen durch einen Strahl (F1) von Atomen mindestens eines magnetischen Materials erzeugt, den man senkrecht zur Rückseite des Mediums auf diese Rückseite richtet.

6. Verfahren nach einem der Ansprüche 3 bis 5, bei dem man die magnetische Abscheidung (64) auf der Gesamtheit oder einem Teil der Seitenwände durch einen Strahl (F2) von Atomen mindestens eines magnetischen Materials erzeugt, den man schräg zur Rückseite des Mediums auf diese Rückseite richtet.

7. Verfahren nach einem der Ansprüche 3 bis 6, bei dem das Medium ein Substrat (26) umfasst und man direkt in diesem Substrat hohle Zonen (28) ausbildet.

8. Verfahren nach einem der Ansprüche 3 bis 6, bei dem das Medium eine erste Schicht (67) umfasst, man auf dieser ersten Schicht eine zweite Schicht (66) erzeugt und man die zweite Schicht durchquerende hohle Zonen (68) ausbildet, so dass die erste Schicht den Boden dieser hohlen Zonen bildet.

9. Verfahren nach einem der Ansprüche 3 bis 8, bei dem man die hohlen Zonen (69) durch Ätzen bildet, durch eine vorher auf der Rückseite ausgebildete Ätzmaske (70) hindurch, man anschließend die magnetische Abscheidung (74) erzeugt, dann die Ätzmaske einschließlich der sich - aufgrund der Erzeugung der magnetischen Abscheidung - darauf befindlichen magnetischen Abscheidung eliminiert.

10. Verfahren nach einem der Ansprüche 3 bis 9, bei dem die Rückseite des Mediums an einem Hilfssubstrat (78) befestigt wird, wobei dieses Medium die magnetische Abscheidung enthaltende hohle Zonen umfasst.

11. Verfahren nach einem der Ansprüche 3 bis 6, bei dem man auf einem Substrat (80) eine erste Schicht (67a) erzeugt, man auf dieser ersten Schicht eine zweite Schicht (67) und auf dieser zweiten Schicht (67) eine dritte Schicht (66) erzeugt, man diese dritte Schicht durchquerende hohle Zonen (68) ausbildet, so dass die zweite Schicht den Boden dieser hohlen Zonen bildet, man die magnetische Abscheidung (82) in den hohlen Zonen erzeugt, man die zweite Schicht (67) von dem Substrat (80) lostrennt und man die hohlen Zonen durch eine vierte Schicht (84) verschließt.
